# EUROPÄISCHE PATENTSCHRIFT

(11) **EP 0 902 255 B1**
(45) Veröffentlichungstag und Bekanntmachung des Hinweises auf die Patenterteilung: **27.10.2004**
(21) Anmeldenummer: 98116950.1
(22) Anmeldetag: 08.09.1998
(51) Int. Cl.: G01D 5/249, G01D 5/347, B62D 15/02

(54) **Winkelsensor**
Angle sensor
Capteur d'angles

(30) Priorität: 09.09.1997 DE 19739358
(43) Veröffentlichungstag der Anmeldung: 17.03.1999
(73) Patentinhaber: Leopold Kostal GmbH & Co. KG, 58507 Lüdenscheid (DE)
(72) Erfinder: Lampe, Wolfgang, 58809 Neuenrade (DE); Bendicks, Norbert, 58675 Hemer (DE); Böbel, Ralf, 44269 Dortmund (DE); Weber, Thomas, 58513 Lüdenscheid (DE); Kerkmann, Detlef,Dr., 58769 Nachrodt (DE)

(56) Entgegenhaltungen:
- EP-A- 0 443 940
- EP-A- 0 774 648
- DE-A- 19 520 299
- US-A- 5 119 670

## Beschreibung

Die Erfindung betrifft einen entsprechend dem Oberbegriff des Hauptanspruchs konzipierten Winkelsensor.

Durch die DE 43 00 663 C1 ist ein Winkelsensor bekannt geworden, wobei eine Leiterplatte vorhanden ist, die sich über einen Vollkreis erstreckt. Infolgedessen benötigt dieser Winkelsensor viel Platz. Die Montage ist zudem relativ aufwendig, da die Leiterplatte über die als Lenk-Einrichtung eingesetzten Mittel montiert werden muß.

Durch die DE 195 20 299 A1 ist eine Einrichtung zur Erkennung der Lage eines bewegbaren Körpers bekannt geworden, bei dem zwei nach unterschiedlichen physikalischen Prinzipien arbeitende Sensorsysteme vorhanden sind, deren Ausgangssignale gemeinsam ausgewertet werden. Der hierbei vorhandene Vorteil, praktisch zwei redundante Sensorinformationen für ein und dieselbe Meßgröße verfügbar zu haben, ist nur mit einem erheblichen meßtechnischen Aufwand zu erreichen.

Weiter inkrementale Winkelsensoren zur Verwendung im Lager einer Lenkwelle bzw. auf einer Kurbelwelle eines Motors sind durch die EP 0 443 940 A2 bzw. die US 5,119,670 bekannt geworden.

Darüber hinaus ist ein Winkelsensor der gattungsgemäßen Art bereits in der EP 0 774 648 A1 offenbart, bei dem eine Reduzierung des Platzbedarfes und eine Vereinfachung der Montage realisiert ist und zwar dadurch, daß der Codering mit n (n>1) geometrisch gleich aufgebauten, jeweils eine gleiche Codierung aufweisenden Codering-Segmenten versehen ist und die Sensorelemente sowie jedes Codering-Segment sich über einen Umfangswinkelbereich von (360/n°) erstrecken.

Dadurch ist der gesamte Winkelsensor auf ein Umfangsegment reduziert, so daß der Platzbedarf auf dieses Segment des Vollkreises herabgesetzt ist. Die Montage ist wesentlich vereinfacht, da das Segment seitlich am Mantelrohr montiert werden kann.

Die Codering-Segmente rufen dabei in Verbindung mit m untereinander einen gleichen Winkelabstand aufweisenden Sensorelementen einen einschrittigen, verketteten m-Bit-Code hervor, durch den die Winkelposition innerhalb eines Segmentes eindeutig gekennzeichnet ist. Die Erfassung des Winkels über ein Segment hinaus erfolgt unter anderem aufgrund einer Initialisierung des Systems durch einen Referenzwert und anschließende drehrichtungsgemäße (digitale) Zählung der Segmente.

Die Lichtschranken sind bei diesem Gegenstand vorzugsweise so aufgebaut, daß als Sensorelement entweder auf einer in einer senkrecht zur Achse der Einrichtung ausgerichteten Ebene vorgesehenen Leiterplatte angeordnete Gabel-Lichtschranken und als Codering ein in einem von den Lichtschranken gebildeten Ringspalt angeordneter Codeblendenring oder auf einer in einer senkrecht zur Achse der Einrichtung ausgerichteten Ebene vorgesehenen Leiterplatte angeordnete Reflexions-Lichtschranken und als Codering ein Codereflexionsring vorgesehen sind.

Dabei können die Reflexions-Lichtschranken dem äußeren und/oder dem inneren Umfang des Codereflexionsringes zugeordnet sein.

Eine magnetische Messung wird dadurch ermöglicht, daß als Sensorelemente mit jeweils einem Magnet kooperierende Magnetfeldsensoren und als Codering ein weichmagnetischer Codeblendenring vorgesehen sind, wobei es günstig ist, wenn jeder Magnetfeldsensor und der jeweils zugehörige Magnet auf einer Seite des weichmagnetischen Codeblendenrings hintereinander angeordnet sind. Es ist aber auch möglich, die Magnetfeldsensoren derart auszubilden, daß jeder Magnetfeldsensor und der jeweils zugehörige Magnet sich gegenüberliegend auf den verschiedenen Seiten des weichmagnetischen Codeblendenrings angeordnet sind. Eine andere magnetische Anordnung kann bei diesem vorbekannten Winkelsensor dadurch verwirklicht werden, daß als Sensorelemente Magnetfeldsensoren und als Codering ein permanentmagnetischer Ring mit einer codierten Aufmagnetisierung vorgesehen sind.

Bei diesen vorbekannten Winkelsensoren besteht das Problem, daß im Falle eines Stromausfalls im Versorgungsnetz es nicht problemlos möglich ist, diesen Winkelsensor wieder korrekt zu initialisieren.

Es ist zwar in einer Weiterbildung dieses Gegenstandes vorgesehen, zusätzliche Merkmale zur Unterscheidung der Segmente, wie z.B. unterschiedlich lichtdurchlässige Blenden vorzusehen, was eine korrekte Initialisierung ermöglichen würde, oft ist aber die Unterscheidbarkeit der Segmente selbst gar nicht erforderlich, so daß man den dafür notwendigen, nicht unerheblichen Zusatzaufwand vermeiden möchte.

Der vorliegenden Erfindung liegt deshalb die Aufgabe zugrunde, den eingangs beschriebenen Winkelsensor derart weiterzubilden, daß eine Normierung desselben bei der ersten Inbetriebnahme bzw. nach Stromausfall im zugeordneten Versorgungsnetz mit geringstem Aufwand, aber dennoch einwandfrei, möglich ist.

Erfindungsgemäß wird die Aufgabe durch die im kennzeichnenden Teil des Hauptanspruches angegebenen Merkmale gelöst.

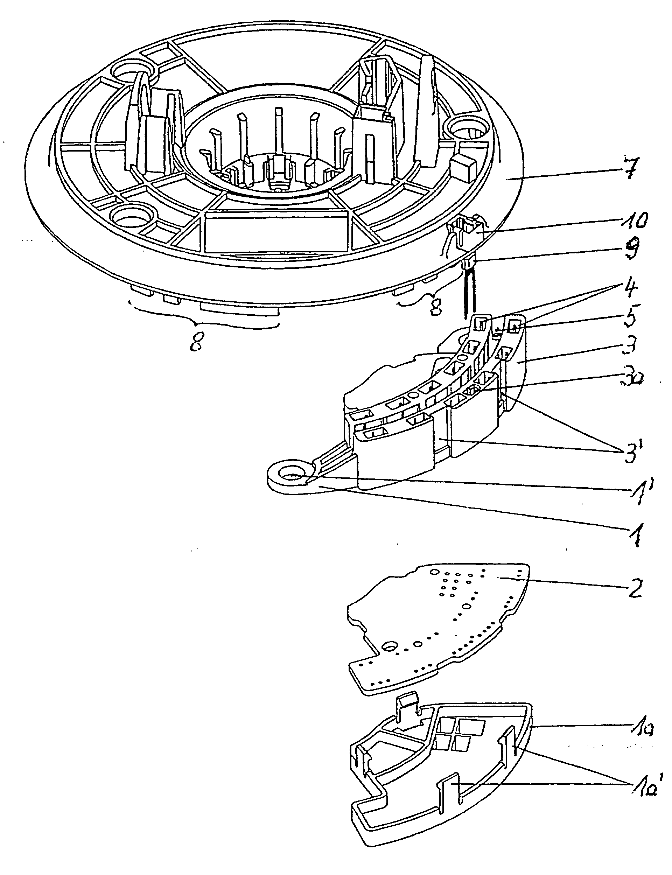

Besonders günstige Ausgestaltungen des erfindungsgemäßen Gegenstandes sind in den Unteransprüchen angegeben und werden anhand eines in der Zeichnung explosionsartig dargestellten Ausführungsbeispieles näher erläutert.

Wie aus der Zeichnung hervorgeht, ist ein segmentförmiger, die Lenkspindel eines Kraftfahrzeuges tangierender Stator 1 an der der Einfachheit halber nicht dargestellten Lenk-Einrichtung bzw. dem zugehörigen Mantelrohr drehfest über nur zum Teil angedeutete Befestigungsmittel montiert. An dem Stator 1 ist eine Leiterplatte 2 gehalten, die die gleiche Außenkontur wie der Stator selbst aufweist. Zur Halterung der mit einer Auswertschaltung kooperierenden oder direkt damit versehenen Leiterplatte 2 ist ein am Stator 1 über in Führungsausnehmungen 3' eingreifende Clipselemente 1a' festlegbares, die Leiterplatte aufnehmendes Gehäuseteil 1a vorhanden. Der Stator 1 weist weiterhin eine auf die Leiterplatte 2 ausgerichtete, segmentförmige Halterung 3 zur Aufnahme von sechs in gleichen Winkelabständen von jeweils 12° angeordneten Lichtschranken 4 auf. Die Sende- und Empfangselemente der Lichtschranken 4 sind unmittelbar mit den Leiterbahnen der Leiterplatte 2 kontaktiert und liegen einander auf den beiden Seiten eines in der Halterung 3 vorhandenen Ringspaltes 5 gegenüber. Der Ringspalt 5 ist dabei konzentrisch zur Achse der der Lenk-Einrichtung zugehörigen Lenkspindel ausgerichtet.

Eine Rotorscheibe ist mit der Lenkspindel bzw. dem damit verbundenen Lenkrad gekoppelt und als Codering 7 mit fünf sich jeweils über einen Umfangswinkel von 72° erstreckenden, gleich ausgeführten Blendenring-Segmenten 8 ausgebildet. Die Blendenring-Segmente werden bei der Drehung des Coderinges 7 durch den Ringspalt 5 hindurchbewegt und erzeugen in Verbindung mit den Lichtschranken 4 einen einschrittigen verketten Code. Dieser Code ermöglicht durch fortlaufende Zählung eine genaue Positionsbestimmung, und zwar auch bei mehreren Umdrehungen des Lenkrades.

Der dargestellte Winkelsensor ist vorteilhafterweise Bestandteil einer sogenannten Wickelfederkassette, die zur Übertragung von Signalen bzw. Energien von einem feststehenden zu einem drehbaren Teil der Lenk-Einrichtung von Kraftfahrzeugen vorgesehen ist.

Um nunmehr den Winkelsensor nach seiner Installation zwecks erster Inbetriebnahme oder nach Stromausfall neu zu normieren, ist an der segmentförmigen Halterung 3 in einer dafür vorgesehenen Kammer 3a ein vorzugsweise auf Hall-Effekt-Basis arbeitendes magnetfeldempfindliches Sensorelement 9 eingesetzt, das mit einem am Codering 7 vorhandenen, als Initiator 10 dienenden, dauermagnetischen Bauelement kooperiert.

Mittels eines solchen - ebenfalls mit der Auswertschaltung elektrisch verbundenen - Sensorelements läßt sich der Winkelsensor dadurch normieren, daß das Lenkrad in eine seiner beiden Endpositionen gebracht wird und anschließend bei der Drehung des Lenkrades in die entgegengesetzte Endposition sowohl die mittels der Sensorelemente 4 erfaßte Codefolge, als auch die von dem zusätzlichen Sensorelement 9 gelieferten Signale registriert werden.

Da die Position des die Signale des zusätzlichen Sensorelements 9 hervorrufenden Initiators auf dem Codeblendenring bekannt ist, wird durch die Korrelation dieser Signale mit der mittels der Sensorelemente 4 erfaßten Codefolge auch die Position der Blendenringsegmente bzgl. eines Kreisumfanges für die Auswerteinheit erfaßbar. Durch die Kenntnis der Endpositionen der Lenkraddrehung ist darüberhinaus die Position der Blendenringsegmente bzgl. des gesamten Bewegungsspielraumes bekannt. Da die Endposition der Lenkraddrehung mit Toleranzen < 360° bzgl. der Mittelstellung des Lenkrades festgelegt sind, ist damit auch das die Mittelstellung des Lenkrades beinhaltende Segment bekannt, und somit der LWS in eindeutiger Art und Weise initialisiert.

Natürlich ist es auch möglich, das magnetfeldempfindliche Bauelement 9 durch zumindest eine Lichtschranke zu ersetzen, die ebenfalls am Stator 1 bzw. der zugehörigen segmentförmigen Halterung 3 angeordnet wird.

Die Lichtschranke kann dabei entweder als Gabel- oder als Reflexionslichtschranke ausgeführt sein, wobei als Initiator entweder ein am Codering vorhandenes Blendenelement oder eine am Codering vorgesehene Reflexionszone herangezogen werden kann.

Besonders günstig ist es, wenn ein zur Winkelerfassung bereits vorhandenes Element eines Blendenring-Segmentes z.B. eine filternde oder dämpfende Eigenschaft aufweist, so daß die damit verbundene Signalveränderung von dem zusätzlichen Sensorelement erfaßbar ist.

## Patentansprüche

1. Winkelsensor für die Lenk-Einrichtung von Kraftfahrzeugen, mit mehreren, an einer Auswertschaltung angeschlossenen Sensorelementen (4), die an einer ortsfest an der Lenk-Einrichtung vorhandenen Halterung in einer senkrecht zur Lenkeinrichtungs-Drehachse ausgerichteten Ebene auf einer zur Lenkeinrichtungs-Drehachse konzentrischen Kreislinie in Umfangsrichtung verteilt angeordnet sind und die mit einem Codering (7) kooperieren, der mit einem um die Lenkeinrichtungs-Drehachse drehbaren Bauteil gekoppelt ist, wobei der Codering (7) mit n (n>1) geometrisch gleich aufgebauten, jeweils eine gleiche, die Winkelposition innerhalb eines Segments (8) eindeutig kennzeichnende Codierung aufweisenden Codering-Segmenten(8) versehen ist, und wobei die Sensorelemente (4) und jedes Codering-Segment (8) sich über einen Umfangswinkel (360/n)° erstrecken, **dadurch gekennzeichnet, daß** am Codering (7) ein bei einer Umdrehung desselben das der Auswertschaltung zugeführte elektrische Ausgangssignal eines zusätzlichen, ebenfalls ortsfest an der Lenk-Einrichtung angeordneten Sensorelements (9) verändernder Initiator (10) angeordnet ist.

2. Winkelsensor nach Anspruch 1, **dadurch gekennzeichnet, daß** dem zusätzlichen, magnetfeldempfindlich ausgeführten Sensorelement (9) als Initiator (10) ein am Codering gehaltener Dauermagnet zugeordnet ist.

3. Winkelsensor nach Anspruch 2, **dadurch gekennzeichnet, daß** das zusätzliche Sensorelement (9) ebenfalls in die an der Lenk-Einrichtung gehaltene, auch die zur Winkelerfassung vorgesehenen Sensorelemente (4) aufnehmende Halterung (3) integriert ist.

4. Winkelsensor nach einem der Ansprüche 2 oder 3, **dadurch gekennzeichnet, daß** das zusätzliche Sensorelement (9) aus einem den Hall-Effekt nutzenden Baustein besteht.

5. Winkelsensor nach Anspruch 1, **dadurch gekennzeichnet, daß** dem zusätzlichen, optoelektronisch ausgeführten Sensorelement (9) zumindest ein damit kooperierendes, am Codering (7) angeordnetes, als Initiator (10) wirkendes Element zugeordnet ist.

6. Winkelsensor nach Anspruch 5, **dadurch gekennzeichnet, daß** das als Initiator (10) wirkende Element als eine am Codering (7) angebrachte Blende ausgeführt ist und daß das damit kooperierende zusätzliche Sensorelement (9) aus einer Gabellichtschranke besteht.

7. Winkelsensor nach Anspruch 6, **dadurch gekennzeichnet, daß** die mit dem Codering (7) einstückig verbundene Blende in einer anderen Ebene als die zur Winkelerfassung vorgesehenen blendenartigen Codering-Segmente (8) angeordnet ist.

8. Winkelsensor nach einem der Ansprüche 6 oder 7, **dadurch gekennzeichnet, daß** die am Codering (7) vorhandene Blende als Polarisationsfilter ausgeführt ist.

9. Winkelsensor nach Anspruch 6, **dadurch gekennzeichnet, daß** die Blende von einem für eine auf optoelektronischen Wege erfolgende Winkelerfassung vorgesehenen Codering-Segment (8) dadurch gebildet ist, daß dasselbe in gewissem Maße strahlendurchlässig ist und daß die zur Winkelerfassung vorgesehenen Sensorelemente (4) eine andere Empfindlichkeit als das zusätzliche Sensorelement (9) aufweisen.

10. Winkelsensor nach Anspruch 9, **dadurch gekennzeichnet**, da die zur Winkelerfassung vorgesehenen Sensorelemente (4) eine andere Intensitäts-Empfindlichkeit als das zusätzliche Sensorelement (9) aufweisen.

11. Winkelsensor nach Anspruch 9, **dadurch gekennzeichnet, daß** die zur Winkelerfassung vorgesehenen Sensorelemente (4) eine andere spektrale Empfindlichkeit als das zusätzliche Sensorelement (9) aufweisen.

12. Winkelsensor nach Anspruch 5, **dadurch gekennzeichnet, daß** das als Initiator (10) wirkende Element als eine am Codering (7) vorhandene Reflexionszone ausgeführt ist, der als zusätzliches Sensorelement (9) eine Reflexionslichtschranke zugeordnet ist.

13. Winkelsensor nach Anspruch 12, **dadurch gekennzeichnet, daß** die Reflexionszone in einer senkrecht zur Achse der Lenk-Einrichtung ausgerichteten Ebene vorhanden ist und daß die zugeordnete Reflexionslichtschranke auf einer zur Reflexionszonenebene parallel liegenden Leiterplatte angeordnet ist.

## Claims

1. Angular displacement sensor for the steering facility of motor vehicles with several sensor elements (4) that are connected to an analysis circuit and arranged on a stationary retention element provided on the steering facility on a plane perpendicular to the rotary axis of the steering facility, distributed towards the circumference on a circular curve concentric to the rotary axis of the steering facility, and which cooperate with a code ring (7) coupled to a component that is rotatable around the rotary axis of the steering facility, with the code ring (7) being provided with n (n>1) code ring segments (8) of the same geometric design, each featuring a coding of the same type that unambiguously distinguishes its angular position within a segment (8), and with the sensor elements (4) and each code ring segment (8) extending over a circumferential angle (360/n)°, **characterized by the fact** that on the code ring (7) an initiator (10) is arranged that changes the electrical output signal of a supplementary sensor element (9) that is also arranged in a stationary manner on the steering facility, the output signal being conveyed to the analysis circuit upon rotation of the code ring (7).

2. Angular displacement sensor in accordance with Claim 1, **characterized by** the fact that a permanent magnet accommodated on the code ring is assigned as an initiator (10) to the supplementary sensor element (9) that is of a type sensitive to magnetic fields.

3. Angular displacement sensor in accordance with Claim 2, **characterized by** the fact that the supplementary sensor element (9) is also integrated into the retention element (3) accommodated on the steering facility for holding the sensor elements provided for angular detection.

4. Angular displacement sensor in accordance with either of Claims 2 or 3, **characterized by** the fact that the supplementary sensor element (9) comprises a module that makes use of the Hall effect.

5. Angular displacement sensor in accordance with Claim 1, **characterized by** the fact that at least one element acting as an initiator (10) is arranged on the code ring (7), is assigned to the supplementary sensor element (9) of an opto-electronic type, and cooperates with the same.

6. Angular displacement sensor in accordance with Claim 5, **characterized by** the fact that the element acting as an initiator (10) is designed as an aperture mounted on the code ring (7) and that the supplementary sensor element (9) cooperating with the same consists of a fork-type photoelectric barrier.

7. Angular displacement sensor in accordance with Claim 6, **characterized by** the fact that the aperture connected solidly to the code ring (7) is arranged on a different level to the aperture-type code ring segments (8) provided for angular detection.

8. Angular displacement sensor in accordance with either Claim 6 or Claim 7, **characterized by** the fact that the aperture provided on the code ring (7) is designed as a polarization filter.

9. Angular displacement sensor in accordance with Claim 6, **characterized by** the fact that the aperture of a code ring segment (8) provided for angular detection effected by opto-electronic means is formed as a result of the fact that the code ring segment (8) is to a certain extent transmissible by beams and that the sensor elements (4) provided for angular detection possess a different sensitivity than the supplementary sensor element (9).

10. Angular displacement sensor in accordance with Claim 9, **characterized by** the fact that the sensor elements (4) provided for angular detection possess a different sensitivity to intensity than the supplementary sensor element (9).

11. Angular displacement sensor in accordance with Claim 9, **characterized by** the fact that the sensor elements (4) provided for angular detection possess a different spectral sensitivity than the supplementary sensor element (9).

12. Angular displacement sensor in accordance with Claim 5, **characterized by** the fact that the element acting as an initiator (19) is designed as a reflection zone provided on the code ring (7) to which a reflection photoelectric barrier is assigned as a supplementary sensor element (9).

13. Angular displacement sensor in accordance with Claim 12, **characterized by** the fact that the reflection zone is provided on a level aligned perpendicular to the axis of the steering facility and that the assigned reflection photoelectric barrier is arranged on a printed circuit board positioned parallel to the reflection zone level.

## Revendications

1. Capteur d'angle pour le dispositif de direction de véhicules automobiles, avec plusieurs éléments de captage (4) raccordés à un circuit d'évaluation, lesquels, répartis, dans le sens périphérique, sur une ligne de cercle concentrique à l'axe de rotation du dispositif de direction, sont disposés sur un support, qui est fixé au dispositif de direction, dans un plan orienté perpendiculairement à l'axe de rotation du dispositif de direction, et coopèrent avec un disque de code (7) qui est couplé avec un module pouvant tourner autour de l'axe de rotation du dispositif de direction, le disque de code (7) étant pourvu de n (n>1) segments de disque de code (8) qui, géométriquement semblables, présentent chacun un même codage qui caractérise de manière univoque la position angulaire au sein d'un segment (8), et les éléments de captage (4) et chaque segment de disque de code (8) s'étendant sur un angle inscrit (360/n°), **caractérisé en ce qu**'au disque de code (7) est associé un initiateur (10) qui, lors d'une rotation dudit disque de code, modifie le signal électrique de sortie d'un élément de captage (9) supplémentaire également fixé au dispositif de direction, lequel signal est conduit au dispositif d'évaluation.

2. Capteur d'angle selon la revendication 1, **caractérisé en ce qu'**un aimant permanent, maintenu au disque de code, est associé, en tant qu'initiateur (10), à l'élément de captage (9) supplémentaire, de conception sensible aux champs magnétiques.

3. Capteur d'angle selon la revendication 2, **caractérisé en ce que** l'élément de captage supplémentaire (9) est également intégré dans le support (3) qui est maintenu au dispositif de direction et accueille aussi les éléments de captage (4) prévus pour le captage d'angle.

4. Capteur d'angle selon l'une des revendications 2 ou 3, **caractérisé en ce que** l'élément de captage supplémentaire (9) consiste en un module qui exploite l'effet Hall.

5. Capteur d'angle selon la revendication 1, **caractérisé en ce qu'**au moins un élément, disposé sur le disque de code (7) et agissant en tant qu'initiateur (10) est associé à l'élément de captage supplémentaire (9) de conception optoélectronique et coopère avec lui.

6. Capteur d'angle selon la revendication 5, **caractérisé en ce que** l'élément agissant en tant qu'initiateur (10) est réalisé sous la forme d'un obturateur qui est disposé sur le disque de code (7), et que l'élément de captage supplémentaire (9), coopérant avec lui, consiste en une barrière lumineuse fourchue.

7. Capteur d'angle selon la revendication 6, **caractérisé en ce que** l'obturateur, formé d'une pièce avec le disque de code (7), est disposé sur un autre plan que les segments du disque de code (8) en forme d'obturateur, prévus pour le captage de l'angle.

8. Capteur d'angle selon l'une des revendications 6 ou 7, **caractérisé en ce que** l'obturateur, qui équipe le disque de code (7), est exécuté sous la forme d'un filtre de polarisation.

9. Capteur d'angle selon la revendication 6, **caractérisé en ce que** l'obturateur est formé par un segment (8) de disque de code, prévu pour un captage d'angle par voie optoélectronique, qui, dans une certaine mesure, est perméable aux rayons, et que les éléments de captage (4), prévus pour le captage d'angle, présentent une autre sensibilité que l'élément de captage supplémentaire (9).

10. Capteur d'angle selon la revendication 9, **caractérisé en ce que** les éléments de captage (4), prévus pour le captage d'angle, présentent une autre sensibilité à l'intensité que l'élément de captage supplémentaire (9).

11. Capteur d'angle selon la revendication 9, **caractérisé en ce que** les éléments de captage (4), prévus pour le captage d'angle, présentent une autre sensibilité spectrale que l'élément de captage supplémentaire (9).

12. Capteur d'angle selon la revendication 5, **caractérisé en ce que** l'élément agissant en tant qu'initiateur (10) est réalisé sous la forme d'une zone de réflexion équipant le disque de code (7), à laquelle une barrière lumineuse à réflexion est associée en tant qu'élément de captage supplémentaire (9).

13. Capteur d'angle selon la revendication 12, **caractérisé en ce que** la zone de réflexion est située dans un plan orienté perpendiculairement par rapport à l'axe du dispositif de direction et que la barrière lumineuse à réflexion associée est disposée sur une plaquette de circuits imprimés, orientée parallèlement au plan de la zone de réflexion.
